# EUROPÄISCHE PATENTSCHRIFT

(11) **EP 2 398 842 B1**
(45) Veröffentlichungstag und Bekanntmachung des Hinweises auf die Patenterteilung: **26.03.2014**
(21) Anmeldenummer: 10703627.9
(22) Anmeldetag: 10.02.2010
(51) Int. Cl.: C08J 3/00

(54) **COMPOUNDIERUNGSVERFAHREN ZUR HERSTELLUNG VON POLYMER-ZUSAMMENSETZUNGEN MIT REDUZIERTEM GEHALT AN FLÜCHTIGEN ORGANISCHEN VERBINDUNGEN**
COMPOUNDING METHOD FOR PRODUCING POLYMER COMPOSITIONS HAVING A REDUCED CONTENT OF VOLATILE ORGANIC COMPOUNDS
PROCÉDÉ DE COMPOUNDAGE POUR LA FABRICATION DE COMPOSITIONS POLYMÈRES À TENEUR RÉDUITE EN COMPOSÉS ORGANIQUES VOLATILS

(30) Priorität: 19.02.2009 DE 102009009680
(43) Veröffentlichungstag der Anmeldung: 28.12.2011
(73) Patentinhaber: Bayer Intellectual Property GmbH, 40789 Monheim (DE)
(72) Erfinder: SEIDEL, Andreas, 41542 Dormagen (DE); THIEM, Hans-Jürgen, 41539 Dormagen (DE)
(74) Vertreter: BIP Patents
(86) Internationale Anmeldenummer: PCT/EP2010/000800
(87) Internationale Veröffentlichungsnummer: WO 2010/094416

(56) Entgegenhaltungen:
- EP-A1- 0 534 235
- EP-A1- 0 867 463
- EP-A1- 1 471 093
- DE-A1- 3 206 184

## Beschreibung

Die Erfindung betrifft ein Compoundierungsverfahren zur Herstellung schlagzähmodifizierter thermoplastischer Zusammensetzungen mit einem niedrigen Gehalt an flüchtigen organischen Verbindungen (nachfolgend VOC, "volatile organic substances" genannt), wobei kostengünstigere Polymerrohstoffe mit einem vergleichweise hohen VOC-Ausgangsgehalt eingesetzt werden können, so dass die Produktionskosten zur Herstellung solcher VOC-reduzierter Polymerzusammensetzungen erniedrigt werden.

Das erfindungsgemäße Compoundierungsverfahren erlaubt diese Reduktion des VOC-Gesamtgehaltes unter vergleichsweise milden thermischen und dadurch das Material schonenden Compoundierungsbedingungen, das heißt insbesondere vergleichsweise niedrige Verarbeitungstemperaturen. Dadurch wird vorteilhafterweise die Zersetzung thermisch empfindlicher Komponenten der Zusammensetzungen weitgehend inhibiert.

Als Compoundieren bezeichnet man in der Polymeraufbereitung die Herstellung einer fertigen Kunststoff-Formmasse, dem Compound, aus gegebenenfalls mehreren polymeren Rohstoffen unter gegebenenfalls Zugabe von Polymeradditive wie beispielsweise Füll- und Verstärkungsstoffe, Haftvermittlern, Gleitmittel, Stabilisatoren etc.. Die Compoundierung erfolgt überwiegend in Knetern oder Extrudern und umfasst die Verfahrensoperationen Fördern, Aufschmelzen, Dispergieren, Mischen, Entgasen und Druckaufbau. An die Compoundierung schließt sich in der Regel eine durch Abkühlung herbeigeführte Erstarrung des Compounds sowie dessen Granulierung an.

In neuerer Zeit wird in Kunststoffmischungen ein möglichst niedriger Gehalt an flüchtigen organischen Komponenten gefordert. Daher kommt der Entgasung beim Compoundieren von Kunststoffen eine steigende Bedeutung zu. Typischerweise beträgt vor dem Entgasen der Anteil der flüchtigen organischen Verbindungen (VOC) in den Kunststoffrohstoffen (d.h. in den im Verfahren eingesetzten Komponenten) bis zu 10000 ppm. In der Praxis wird angestrebt, im fertigen Compound (d.h. beispielsweise im durch Compoundierung, Abkühlen und Granulierung hergestelltem Granulat) einen VOC-Gehalt von kleiner 600 ppm, bevorzugt kleiner 400 ppm zu erreichen.

Bei der Herstellung von Polymer-Zusammensetzungen mit niedrigem Restflüchtigen-Gehalt werden diese zur Entgasung in der Regel im geschmolzenen Zustand und bei möglichst hoher Temperatur, welche der Erhöhung der Flüchtigkeit der aus der Zusammensetzung zu entfernenden organischen Substanzen dient, einem Unterdruck ausgesetzt. Die dadurch realisierte Reduktion der VOCs im Compound reicht aber häufig nicht aus, den wachsenden Anforderungen verschiedener Anwendungsfelder (z.B. für Produkte für Automobilinnen- oder Wohnraumanwendungen) gerecht zu werden. Dieses gilt insbesondere für temperatursensible Polymere oder Polymerblends, bei denen die Temperatur bei dem Entgasungsprozess naturgemäß nach oben begrenzt ist (beispielsweise - wie weiter unten im Detail erläutert - aufgrund der drohenden, thermisch bedingten Abspaltung von Monomeren oder aber der thermohydrolytischen Spaltung von Polymerketten unter Erniedrigung des mittleren Polymermolekulargewichtes). Zur Realisierung der angestrebten niedrigen VOC-Zielgehalte ist es daher im allgemeinen bei den Verfahren des Standes der Technik erforderlich, bei der Herstellung von Polymer-Zusammensetzungen enthaltend thermosensible Polymere nur solche Polymerrohstoffe mit bereits sehr niedrigem Ausgangsgehalt an VOCs, bevorzugt mit einem Gehalt an VOCs von maximal 600 ppm einzusetzen. Derartige VOC-arme Polymerrohstoffe müssen im allgemeinen bereits bei deren Herstellung durch gegebenenfalls mehrfach wiederholte verfahrenstechnische Maßnahmen in ihrem VOC-Gehalt reduziert werden, bevor sie bei der Herstellung (Compoundierung) der Polymerzusammensetzung zum Einsatz kommen. Derartige zusätzliche Verfahrensschritte zur Entgasung der eingesetzten Polymerrohstoffen haben den Nachteil, dass diese zu erhöhten Kosten bei der Herstellung dieser Polymerrohstoffe führen. Es besteht daher ein allgemeines Bedürfnis, ein Compoundierungsverfahren bereitzustellen, welches die angestrebten niedrigen VOC-Gehalte der Zielzusammensetzung auch dann erreicht, wenn Rohstoffe mit höherem VOC-Gehalt (d.h. beispielsweise von mehr als 600 ppm und bis zu 2000 ppm) eingesetzt werden, weil dies die Kosten der Herstellung der daraus resultierenden Polymerzusammensetzung deutlich reduzieren würde.

In temperatursensiblen Polymeren oder Polymerblends können sich während des Compoundierprozesses neben den zu entgasenden Restmonomeren und -lösemitteln, welche bereits in den Rohstoffen enthalten sind, auch Monomere durch thermisch induzierte Polymerrückspaltung bilden. Bei kautschukmodifizierten Blends auf Basis eines auf Polybutadien basierenden Schlagzähmodifikators, wie beispielsweise Blends aus Polycarbonat und AcrylnitrilButadien-Styrol-Terpolymer (PC/ABS-Blends), ist dies beispielsweise bei ABS der Fall, wobei das enthaltene Polybutadien zu 1,3-Butadien rückspalten kann. Die Rückspaltungskinetik des Polybutadiens ist im Allgemeinen stark temperaturabhängig, das heißt mit steigender Temperatur nimmt die Rückspaltung überproportional zu. Die Schwierigkeit bei der Prozessführung der Compoundierung liegt darin, dass für eine effektive Entgasung der flüchtigen Komponenten sowohl ein niedriger Druck wie auch eine hohe Temperatur erforderlich sind, bei einer hohen Temperatur gleichzeitig aber die Rückspaltung des Polybutadiens stark zunimmt und somit der 1,3-Butadiengehalt im Endprodukt im allgemeinen weniger von dessen Konzentration in den eingesetzten Ausgangsrohstoffen und der Entgasungseffizienz des Compoundierungsverfahrens als vielmehr im Wesentlichen vom Temperaturprofil im Compoundierungsverfahren abhängt. Zusätzlich kommt erschwerend hinzu, dass bei einer Reduzierung des Energieeintrags zur Absenkung der Temperatur und Vermeidung der Rückspaltung Probleme beim Aufschmelzen und der Durchmischung der Compound-Komponenten auftreten können, was sich negativ auf die Produktqualität (das heißt die mechanischen Eigenschaften der Zusammensetzung) auswirkt. Dies gilt insbesondere bei hohen Durchsätzen, also kurzen Verweilzeiten, welche für einen wirtschaftlichen Compoundierprozess erforderlich sind.

Polykondensationspolymere wie beispielsweise Polycarbonate, Polyester, Polyestercarbonate oder Polyamide können sich bei den hohen Temperaturen, wie sie für die erforderliche Entgasung gemäß konventioneller Verfahren entsprechend dem bisherigen Stand der Technik notwendig wären, darüber hinaus aufgrund der Restfeuchte der eingesetzten Polymerrohstoffe thermohydrolytisch unter negativer Beeinflussung der Polymerkettenlänge und somit letztendlich auch der Produktqualität (das heißt der mechanischen Eigenschaften der Zusammensetzung) zersetzen. Um dieses zu verhindern ist in der Regel eine aufwendige und kostenintensive Vortrocknung aller eingesetzten Rohstoffe erforderlich.

Es ist grundsätzlich auch bekannt, Schleppmittel zur weiteren Minderung des Restflüchtigen-Gehalts bei der Entgasung von Polymerschmelzen bei gegebener Schmelzetemperatur einzusetzen.

WO-A 2008/025446 beschreibt beispielsweise ein Verfahren zur Compoundierung von Polymeren und Polymerblends, darunter auch PC+ABS-Zusammensetzungen auf einem Schneckenextruder, wobei das Endprodukt einen besonders niedrigen Gehalt an Restlösungsmitteln, Monomeren und Oligomeren aufweist, dadurch gekennzeichnet, dass die Entgasung unter Einsatz eines inerten Schleppmittels (beispielsweise Stickstoff, Kohlendioxid oder ein Edelgas) erfolgt, welches in die Polymerschmelze eingeleitet, in dieser dispergiert und nachfolgend durch Anlegen von Unterdruck in einer Entgasungszone zusammen mit den flüchtigen organischen Verbindungen wieder aus dem Produkt entfernt wird. Ein solches Verfahren erfordert eine spezielle technische Auslegung des Extruders mit aufwendiger Extruderperipherie und ist insofern im Allgemeinen ohne investitionsträchtige Nachrüstung mit herkömmlichen Maschinen nicht umsetzbar.

Auch die Verwendung von Wasser als kostengünstiges Schleppmittel ist grundsätzlich bekannt. Die homogene Zudosierung des Wasser sowie dessen für eine effektive Entgasung notwendige homogene Verteilung in der Polymerschmelze ist jedoch nach wie vor eine technische Herausforderung.

WO-A 2004/069913 beschreibt ein Verfahren zur Minderung von Schadstoffen und/oder geruchsemittierenden Substanzen in polymeren Werkstoffen unter Einsatz von hydrophilen anorganischen Trägermaterialien wie Zeolithe oder Kieselsäuren mit einer Beladung von 30 bis 90 Gew.-% Wasser als Additiv. Bei diesem Verfahren verbleiben aber die hydrophilen anorganischen Trägermaterialien im Endprodukt und beeinträchtigen dessen mechanische Eigenschaften.

EP-A 867 463 und EP-A 1 471 093 beschreiben Verfahren zur Herstellung von elastomermodifizierten Thermoplasten durch Mischen von Elastomer mit einem thermoplastischen Kunststoff, wobei das feuchte Elastomer, insbesondere ein Pfropfpolymer, das aus einem Latex gefällt ist, auf 1 bis 50 Gew.-% Restfeuchte vorentwässert und in den als Schmelze vorliegenden thermoplastischen Kunststoff eingemischt wird, dadurch gekennzeichnet, dass das Verdampfen des dem Elastomeren anhaftenden Prozesswassers, das Schmelzen des Elastomeren, das Legieren des Elastomeren mit der Schmelze des thermoplastischen Kunststoffs, sowie die Entfernung von weiteren organischen flüchtigen Bestandteilen simultan in einem Prozessraum erfolgt. Bei diesem Verfahren werden Thermoplast und Elastomer im allgemeinen im Bereich von 1:4 bis 4:1 eingesetzt. Aufgrund der in diesem Prozess vergleichsweise langen Verweilzeit und hohen thermischen Belastung der Mischung im Prozessraum von 2 bis 20 Minuten und der im allgemeinen hohen Wasserkonzentration im Prozessraum eignet sich dieses Verfahren nicht zur Herstellung elastomermodifizierter Thermoplaste, in denen der Thermoplast gegenüber hydrolytischem Abbau empfindlich sind.

EP-A 534 235 beschreibt Verfahren zur Herstellung von schlagzähmodifizierten Thermoplasten durch Compoundierung von mechanisch teilweise entwässerten Kautschuk-Latices in thermoplastische Polymere oberhalb der Erweichungspunkte der thermoplastischen Polymere, dadurch gekennzeichnet, dass man die Kautschuke vor der Einmischung in die thermoplastischen Polymere in einem Extruder teilweise entwässert und das verbliebene Restwasser während der Compoundierung durch Entgasungsvorrichtungen vor und nach der Einmischstelle entfernt. Die EP-A 534 235 offenbart keine Verfahren zur Herstellung kautschukmodifizierter Polykondensationsprodukte, insbesondere Polycarbonate. Es ist aufgrund der in solchen Prozessen im allgemeinem zum Einsatz kommenden vergleichsweise hohen Wasserkonzentrationen und langen Verweilzeiten bei hohen Temperaturen auch davon auszugehen, dass sie sich für die Herstellung solcher hydrolyseempfindlichen Zusammensetzungen grundsätzlich nicht eignen.

Der Erfindung liegt die Aufgabe zu Grunde, ein unter thermisch milden Bedingungen ablaufendes Verfahren zur kostengünstigen Herstellung schlagzähmodifizierter thermoplastischer Polymerzusammensetzungen enthaltend mindestens einen Schlagzähmodifikator und ein weiteres davon verschiedenes organisches thermoplastisches Polymer bereitzustellen, wobei der Gehalt an flüchtigen organischen Verbindungen (VOC) in der resultierende Zusammensetzung reduziert ist im Vergleich zu dem entsprechenden Gehalt an flüchtigen organischen Substanzen der Zusammensetzungen hergestellt nach aus dem Stand der Technik bekannten Verfahren. Dabei sollen die resultierenden schlagzähmodifizierten Zusammensetzungen bevorzugt einen Gesamtgehalt an flüchtigen organischen Verbindungen (VOC) von maximal 600 ppm, bevorzugt von maximal 400 ppm gemessen mittels Headspace-Gaschromatographie aufweisen.

Überraschenderweise wurde gefunden, dass das Verfahren zur Herstellung von schlagzähmodifizierten Polymerzusammensetzungen enthaltend
A) mindestens ein kautschukfreies organisches thermoplastisches Polymer,
B) mindestens ein pulverförmiges Pfropfpolymerisat aus
   B.1) einem Vinyl(co)polymerisat als Hülle, und
   B.2) einem Elastomer als Kern,
   wobei das Pfropfpolymerisat einen Restgehalt an flüchtigen organischen Verbindungen
   (VOC) von nicht mehr als 10000 ppm, bevorzugt von mehr als 600 ppm und bis zu 8000 ppm, insbesondere von mehr als 800 ppm und bis zu 6000 ppm aufweist,
C) gegebenenfalls ein weiteres Polymerharz ausgewählt aus mindestens einem Polymer der Gruppe bestehend aus einem kautschukfreien Vinyl(co)polymer C.1 und einem granulatförmigen kautschukmodifizierten Vinyl(co)polymer C.2,
D) gegebenenfalls handelsübliche Polymeradditive verschieden von den Komponenten A, B und C,
wobei
(i) eine Mischung mit einem Wassergehalt (bezogen auf diese im Schritt (i) hergestellte Mischung) von 2 bis 40 Gew.-%, bevorzugt von 5 bis 32 Gew.-%, besonders bevorzugt von 8 bis 25 Gew.-% hergestellt wird aus
   - der Gesamtmenge oder einer Teilmenge der eingesetzten Komponente B,
   - gegebenenfalls der Gesamtmenge oder Teilmengen der Komponenten A, C und/oder D
   - sowie 0,2 bis 7 Gew.-Teilen, bevorzugt 0,4 bis 7 Gew.-Teilen, besonders bevorzugt 0,7 bis 5 Gew.-Teilen, am stärksten bevorzugt 1,0 bis 3 Gew.-Teilen (bezogen auf die Gesamtzusammensetzung aus A+B+C+D=100 Gew.-Teile) an Wasser,
(ii) die aus Schritt (i) resultierende Mischung mit den jeweiligen Gesamtmengen bzw. nach Schritt (i) verbliebenen Teilmengen der Komponenten A bis D der Zusammensetzung in einem Compoundierungsaggregat durch Zuführung thermischer und/oder mechanischer Energie auf eine Temperatur von 200°C bis 350°C, bevorzugt 220°C bis 320°C, besonders bevorzugt 230°C bis 300°C aufgeheizt und dadurch aufgeschmolzen, gemischt, ineinander dispergiert und nachfolgend in einer Entgasungszone des Compoundierungsaggregats entgast werden,
   - wobei das Compoundierungsaggregat eine Aufschmelz- und Mischzone oder eine kombinierte Aufschmelz- und Mischzone aufweist (diese "Aufschmelz- und Mischzone" wird nachfolgend auch als "Knet- und Aufschmelzzone" bezeichnet),
   - wobei die aus Schritt (i) resultierende Mischung vollständig oder optional jeweils teilweise zum einen gemeinsam mit den Restmengen der Komponenten A bis D der Zusammensetzung in eine nachfolgend als Einzugszone bezeichnete Zone vor der Aufschmelzzone in dasCompoundierungsaggregat, oder alternativ in eine Zone hinter der Aufschmelzzone direkt in die vorgemischte Schmelze der in die Einzugszone des Compoundierungsaggregates dosierten Komponenten der Zusammensetzung dosiert werden kann,
   - wobei in der Entgasungszone des Compoundierungsaggregats ein absoluter Druck p_{abs} von höchstens 800 mbar, bevorzugt höchstens 500 mbar, besonders bevorzugt höchstens 200 mbar eingestellt wird,
   - wobei die mittlere Verweilzeit, in der die Schmelze der Zusammensetzung mit dem Wasserin Kontakt steht, welches über die in Verfahrensschritt (i) hergestellten Mischung in das Verfahren eingebracht wird, bevorzugt auf maximal 90 s, besonders bevorzugt maximal 60 s, insbesondere bevorzugt auf max. 30 s begrenzt ist,
(iii) die aus Schritt (ii) resultierende Schmelze bei Austritt aus dem Compoundierungsaggregat durch Abkühlen wieder verfestigt wird,
die oben genannte Aufgabe löst.

Das Anlegen des Unterdrucks in Schritt (ii) hat den technischen Effekt, dass das in der aus Verfahrensschritt (i) resultierenden Mischung enthaltene Wasser in Form von Wasserdampf gemeinsam mit einem Teil der flüchtigen organischen Kohlenstoffverbindungen wieder aus der Zusammensetzung entfernt wird.

Bei dem Compoundierungsaggregat handelt es sich bevorzugt um einen Zweischneckenextruder, besonders bevorzugt um einen Zweischneckenextruder mit gleichsinnig rotierenden Wellen, wobei der Zweischneckenextruder ein Längen/Durchmesser-Verhältnis der Schneckenwelle bevorzugt von 32 bis 44, besonders bevorzugt von 34 bis 38 aufweist.

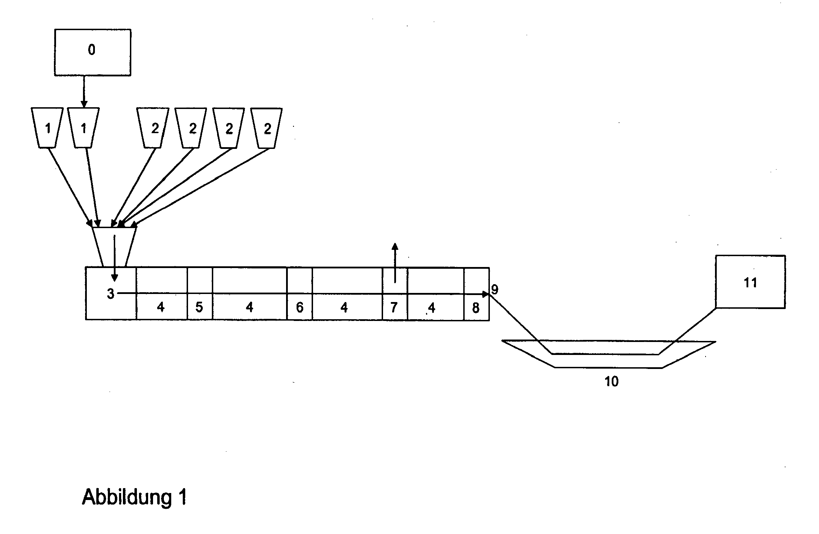

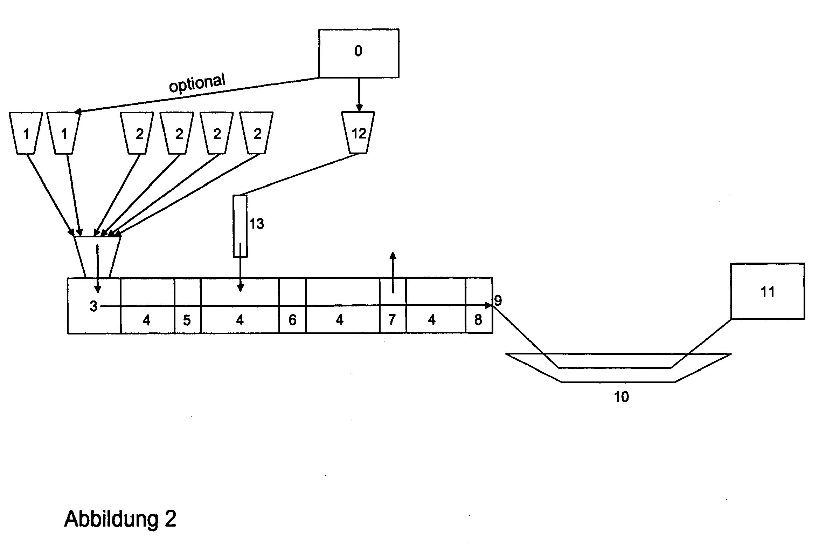

Zur Illustration des erfindungsgemäßen Verfahrens in der Ausführungsform mit Zufuhr der Mischung gemäß Verfahrensschitt (i) über den Hautpeinzug des Compounders dient die schematische Abbildung 1. Zur Illustration des erfindungsgemäßen Verfahrens in der Ausführungsform mit zumindest partieller Zufuhr der Mischung gemäß Verfahrensschitt (i) über einen Seitenextruder dient die schematische Abbildung 2. In den beiden Abbildungen bedeuten jeweils:
- 0: Mischaggregat
- 1: Pulverdosierungen (in dem in Abbildung 2 gezeigten Aufbau optional)
- 2: Granulatdosierungen
- 3: Einzugzone des Zweischneckenextuders (nachfolgend ZSK genannt)
- 4: Förderzonen
- 5: Knet- und Aufschmelzzone
- 6: Misch-/Dispergierzone (in dem in Abbildung 1 gezeigten Aufbau optional)
- 7: Entgasungs-/Vakuumzone
- 8: Druckaufbauzone
- 9: Düsenplatte mit Düse
- 10: Wasserbad
- 11: Granulator
- 12: Pulverdosierung
- 13: Seitenextruder

Bei Komponente A handelt es sich bevorzugt um mindestens ein thermoplastisches Polymer hergestellt durch Polykondensation, besonders bevorzugt um mindestens ein Polymer ausgewählt aus der Gruppe bestehend aus Polycarbonat, Polyestercarbonat, Polyester und Polyamid, höchst bevorzugt um mindestens ein Polymer ausgewählt aus der Gruppe bestehend aus aromatischem Polycarbonat, aromatischem Polyestercarbonat und aromatischem Polyester, allerhöchst bevorzugt um aromatisches Polycarbonat.

Bei Komponente B handelt es sich bevorzugt um ein ABS-Pfropfpolymer (Acrylnitril-Butadien-Styrol-Terpfropfpolymer) oder MBS-Pfropfpolymer (Methylmethacrylat-Butadien-Styrol-Terpfropfpolymer).

In bevorzugter Ausführungsform besteht die Mischung gemäß Verfahrensschritt (i) ausschließlich aus pulverförmigen Komponenten A bis D der Zusammensetzung und Wasser. Es handelt sich bei den gemäß Verfahrensschritt (i) hergestellten Mischungen in bevorzugter Ausführungsform um rieselfähige Pulver.

In einer besonders bevorzugten Ausführungsform des Verfahrens wird im Schritt (i) eine Mischung bestehend aus
5 bis 15 Gew.-Teilen (bezogen auf die Summe der Komponenten A bis D = 100 Gew.-Teile) Komponente B,
0 bis 5 Gew.-Teilen vorzugsweise 0,1 bis 5 Gew.-Teilen (bezogen auf die Summe der Komponenten A bis D = 100 Gew.-Teile) pulverförmige Komponente D und
8 bis 25 Gew.-Teilen, bezogen auf die in diesem Schritt (i) hergestellte Mischung, Wasser hergestellt.

Unter "Pulver" oder "pulverförmig" im Sinne der Erfindung wird eine Komponente oder eine Mischung aus mehreren Komponenten verstanden, die im festen Aggregatszustand vorliegt und bei denen die Partikel Teilchengrößen von kleiner als 2 mm, bevorzugt von kleiner als 1 mm, insbesondere von kleiner als 0,5 mm aufweisen.

Unter "Granulat" im Sinne der Erfindung wird eine Komponente oder eine Mischung aus mehreren Komponenten verstanden, die im festen Aggregatszustand vorliegt, wobei die festen Partikel eine Teilchengröße von mindestens 2 mm und im allgemeinen von nicht mehr als 10 mm aufweisen. Die Granulatkörner können beliebige Form aufweisen, beispielsweise Linsenform, Kugelform oder Zylinderform.

Das erfindungsgemäße Verfahren ist insbesondere auch geeignet zur Herstellung von schlagzähmodifizierten Polymerzusammensetzungen mit niedrigem VOC-Gehalt aus solchen Polymerrohstoffen A bis C mit vergleichsweise hohem VOC-Ausgangsgehalt. Die Erfindung betrifft insofern bevorzugt auch ein solches Verfahren, bei dem der Gehalt der durch die polymeren Rohstoffe A bis C in den Compoundierungsprozess eingetragenen VOCs, das heißt die Summe der jeweils mit den jeweiligen prozentualen Anteilen der Komponenten A bis C in der Zusammensetzung gewichteten VOC-Gehalte dieser Ausgangsrohstoffe, bei mehr als 600 ppm und bis zu 2000 ppm, insbesondere bei mehr als 800 ppm und bis zu 1500 ppm liegt.

Ein weiterer Gegenstand der Erfindung sind die Zusammensetzungen hergestellt nach einem der zuvor beschriebenen erfindungsgemäßen Verfahren sowie Formkörper hergestellt aus solchen Zusammensetzungen.

### Komponente A

Als Komponente A kommen grundsätzlich alle Arten thermoplastischer Polymere oder Mischungen aus zwei oder mehr als zwei solcher thermoplastischer Polymere in Frage.

Beispielhaft seien hier genannt Polyolefine (wie Polyethylen und Polypropylen), Vinyl(co)polymere (wie Polyvinylchlorid, Styrol(co)polymere, Polyacrylate, Polyacrylnitril), Polyvinylacetat, thermoplastische Polyurethane, Polyacetale (wie Polyoxymethylen und Polyphenylenether), sowie insbesondere und bevorzugt auch Kondensationpolymere wie beispielsweise Polyamide, Polyimide, Polycarbonate, Polyester, Polyestercarbonate, Polysulfone, Polyarylate, Polyarylether, Polyphenylenether, Polyarylsulfone, Polyarylsulfide, Polyethersulfone, Polyphenylensulfid, Polyetherketone, Polyamidimide, Polyetherimide und Polyesterimide.

Besonders bevorzugt kommt als Komponente A mindestens ein Polymer ausgewählt aus der Gruppe bestehend aus Polycarbonat, Polyestercarbonat, Polyester und Polyamid, besonders bevorzugt mindestens ein Polymer ausgewählt aus der Gruppe bestehend aus aromatischem Polycarbonat, aromatischem Polyestercarbonat und aromatischem Polyester zum Einsatz.

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 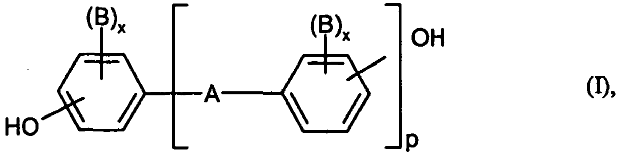 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (In oder (III) 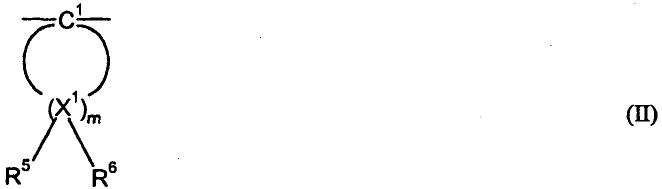 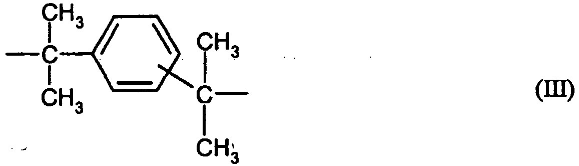
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.
Besonders bevorzugt sind Gemische der .Disäuredichloride der Isophthalsäure und der Terephthalsäure im Verhältnis zwischen 1:20 und 20: 1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die erfindungsgemäß als Komponente A in Frage kommenden Polyalkylenterephthalate sind in bevorzugter Ausführungsform Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die Komponente A kann als Pulver und/oder Granulat eingesetzt werden.

Die Komponente A kommt in den erfindungsgemäßen Zusammensetzungen bevorzugt in einer Menge von 10 bis 95 Gew.-Teilen, bevorzugt von 30 bis 90 Gew.-Teilen, besonders bevorzugt von 40 bis 80 Gew.-Teilen, jeweils bezogen auf die Summe der Gewichtsteile der Komponenten A bis D = 100 Gew.-Teile, zum Einsatz.

### Komponente B

Bei der Komponente B handelt es sich um ein pulverförmiges Pfropfpolymer oder um eine Mischung aus mehreren pulverförmigen Pfropfpolymeren. Bevorzugt als Komponente B zum Einsatz kommende Pfropfpolymere umfassen ein oder mehrere Pfropfpolymerisate von
- B.1: 5 bis 95, vorzugsweise 20 bis 90, insbesondere 25 bis 50 Gew.-%, bezogen auf Komponente B, wenigstens eines Vinylmonomeren auf
- B.2: 95 bis 5, vorzugsweise 80 bis 10, insbesondere 75 bis 50 Gew.-%, bezogen auf Komponente B, einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 2 µm, besonders bevorzugt 0,15 bis 0,6 µm.

Monomere B.1 sind vorzugsweise Gemische aus
- B.1.1: 50 bis 99, bevorzugt 60 bis 80, insbesondere 70 bis 80 Gew.-Teile, bezogen auf B.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
- B.1.2: 1 bis 50, bevorzugt 20 bis 40, insbesondere 20 bis 30 Gew.-Teilen, bezogen auf B.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.2 sind Dienkautschuken, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -20°C liegt. Besonders bevorzugt ist reiner Polybutadienkautschuk.

Besonders bevorzugte Polymerisate B sind beispielsweise ABS oder MBS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfpolymerisate B besitzten eine Kern-Schale-Struktur.

Der Gelanteil der Pfropfgrundlage B.2 beträgt bei in Emulsionspolymerisation hergestellten Pfropfpolymerisaten mindestens 30 Gew.-%, vorzugsweise mindestens 40 Gew.-% (in Toluol gemessen).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß B.2 sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl-und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di-und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 bzw. der Pfropfpolymere B wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kommt in den erfindungsgemäßen Zusammensetzungen bevorzugt in einer Menge von 3 bis 60 Gew.-Teilen, bevorzugt von 5 bis 40 Gew.-Teilen, besonders bevorzugt von 5 bis 30 Gew.-Teilen, jeweils bezogen auf die Summe der Gewichtsteile der Komponenten A bis D = 100 Gew.-Teile, zum Einsatz.

### Komponente C

Bei den kautschukfreien Vinyl(Co)Polymerisaten gemäß Komponente C.1 handelt es sich um kautschukfreie Homo- und/oder Copolymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigten Carbonsäuren sowie Derivaten (wie Anhydride und Imide) ungesättigter Carbonsäuren.

Insbesondere geeignet sind (Co)Polymerisate C.1 aus
- C.1.1: 50 bis 99 Gew.-%, bevorzugt 60 bis 80, insbesondere 70 bis 80 Gew.-Teile, jeweils bezogen auf das (Co)Polymerisat C.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C₁-C₈)-Alkylester (wie beispielsweise Methylmethacrylat, n-Butylacrylat, tert.-Butylacrylat) und
- C.1.2: 1 bis 50 Gew.-%, bevorzugt 20 bis 40, insbesondere 20 bis 30 Gew.-Teilen, jeweils bezogen auf das (Co)Polymerisat C.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methyl-methacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate C.1 sind harzartig, thermoplastisch und kautschukfrei. Besonders bevorzugt ist das Copolymerisat aus C.1.1 Styrol und C.1.2 Acrylnitril.

Derartige (Co)Polymerisate C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch GPC) zwischen 15.000 und 250.000 g/mol.

Die kautschukfreien (Co)Polymerisate C.1 können als Pulver und/oder als Granulat eingesetzt werden.

Die kautschukmodifizierten Vinyl(co)polymere gemäß Komponente C.2 sind ausgewählt aus mindestens einem Polymeren der Gruppe bestehend aus
- C.2.1: in Granulatform vorliegende Pfropfpolymere und
- C.2.2: in Granulatform vorliegende Präcompounds aus mindestens einem Pfropfpolymeren C.2.2.1 und mindestens einem kautschukfreien Vinyl(co)polymeren C.1.

Dabei handelt es sich bei den Pfropfpolymeren gemäß den Komponenten C.2.1 und C.2.2.1 jeweils um Pfropfpolymere, welche hinsichtlich des chemischen Aufbaus und der Herstellung der Beschreibung der Komponente B entsprechen, wobei sich Komponenten C.2.1 und C.2.2.1 von der Beschreibung der Komponente B aber dadurch unterscheiden, dass es sich bei C.2.1 um Pfropfpolymere, welche in Granulatform vorliegen, und bei C.2.2.1 um solche Pfropfpolymere die entweder in Granulat- oder Pulverform vorliegen können, handelt.

Unter Präcompound im Sinne der Erfindung sind zu verstehen solche Mischungen aus Pfropfpolymeren C.2.2.1 und kautschukfreien Vinyl(co)polymeren C.1, welche in einem Compoundierungsaggregat, beispielsweise einem Knetreaktor oder Zweiwellextruder durch Zuführung thermischer und/oder mechanischer Energie auf eine Temperatur von 180°C bis 300°C, bevorzugt 200°C bis 280°C, besonders bevorzugt 220°C bis 260°C aufgeheizt und dadurch aufgeschmolzen, gemischt und ineinander dispergiert, und danach wieder abgekühlt und granuliert worden sind. In bevorzugter Ausführungsform kommt dabei das Pfropfpolymer C.2.2.1 in feuchtem Zustand (d.h. in Anwesenheit von Wasser) gemäß der Verfahren, welche in EP 0 768 157 A1 und EP 0 867 463 A1 beschrieben sind, zum Einsatz.

Präcompounds gemäß Komponente C.2.2 enthalten bevorzugt 10 bis 70 Gew.-Teile, besonders bevorzugt 20 bis 60 Gew.-Teile, insbesondere bevorzugt 25 bis 55 Gew.-Teile (jeweils bezogen auf den Präcompound) Pfropfpolymer C.2.2.1 und bevorzugt 30 bis 90 Gew.-Teile, besonders bevorzugt 40 bis 80 Gew.-Teile, insbesondere bevorzugt 45 bis 75 Gew.-Teile (jeweils bezogen auf den Präcompound) an kautschukfreien Vinyl(co)polymer C.1.

Die Komponente C kommt in den erfindungsgemäßen Zusammensetzungen bevorzugt in einer Menge von 0 bis 60 Gew.-Teilen, bevorzugt von 0 bis 40 Gew.-Teilen, besonders bevorzugt von 5 bis 35 Gew.-Teilen, jeweils bezogen auf die Summe der Gewichtsteile der Komponenten A bis D = 100 Gew.-Teile, zum Einsatz.

### Komponente D

Die Zusammensetzung kann als Komponente D handelsübliche Polymeradditive enthalten. Als handelsübliche Polymeradditive gemäß Komponente D kommen Additive wie beispielsweise Flammschutzmittel (beispielsweise Phosphor- oder Halogenverbindungen),-Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe (beispielsweise Talk, ggf. gemahlene Glas- oder Karbonfasern, Glas- oder Keramik(hohl)kugeln, Glimmer, Kaolin, CaCO₃ und Glasschuppen) sowie Farbstoffe und Pigmente (beispielsweise Ruß, Titandioxid oder Eisenoxid) und Brönstetsaure Verbindungen als Basenfänger, oder aber Mischungen mehrerer der genannten Additive in Frage.

Als Flammschutzmittel gemäß Komponente D werden bevorzugt phosphorhaltige Verbindungen eingesetzt. Diese sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV) 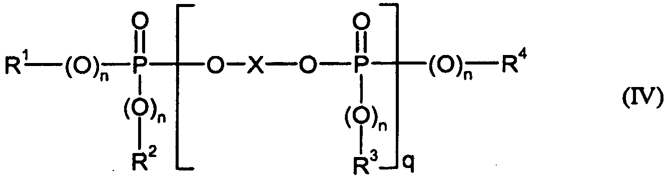 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
- n: unabhängig voneinander, 0 oder 1,
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30, bevorzugt 0,3 bis 20, besonders bevorzugt 0,5 bis 10, insbesondere 0,5 bis 6, ganz besonders bevorzugt 1,1 bis 1,6.
- X: steht besonders bevorzugt für 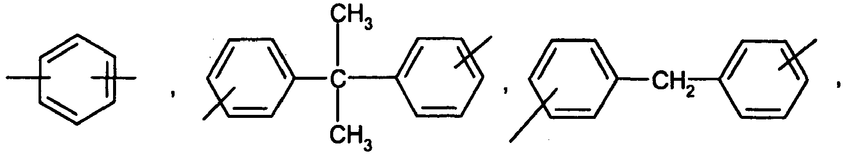 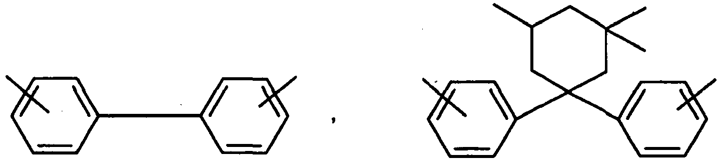 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente D können auch Mischungen verschiedener Phosphate eingesetzt werden.

Phosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresyl-phosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (IV), die sich vom Bisphenol A ableiten, ist insbesondere bevorzugt.

Höchst bevorzugt als Komponente D ist Bisphenol-A basierendes Oligophosphat gemäß Formel (IVa).

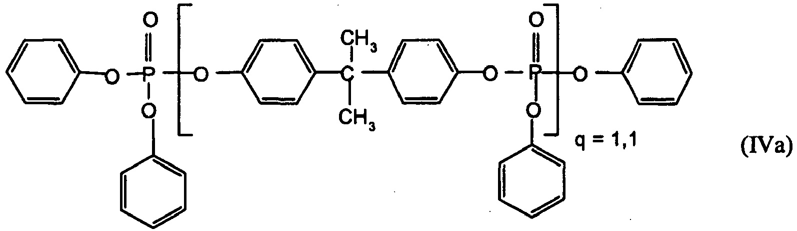

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelper-meationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Die Flammschutzmittel werden in bevorzugter Ausführungsform in Kombination mit Polytetrafluorethylen (PTFE) als Antidrippingmittel eingesetzt.

Als Füllstoff kommt als Komponente D bevorzugt natürlich vorkommender oder synthetisch hergestellter Talk zum Einsatz.

Reiner Talk hat die chemische Zusammensetzung 3 MgO·4SiO₂·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Als Komponente D kommen bevorzugt solche Talktypen mit besonders hoher Reinheit zum Einsatz. Diese sind gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Besonders bevorzugte Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft ist insbesondere der Einsatz des Talkes in Form von feinvermahlenen Typen mit einer mittleren Partikeldurchmesser d₅₀ von <10 µm, bevorzugt <5 µm, besonders bevorzugt <2 µm, ganz besonders bevorzugt ≤1,5 µm.

Der Talk kann oberflächenbehandelt, z.B. silanisiert sein, um eine bessere Verträglichkeit mit dem Polymer zu gewährleisten.

Im Hinblick auf die Verarbeitung und Herstellung der Formmassen ist der Einsatz kompaktierter Talks vorteilhaft.

Die Komponente D kann als Pulver und/oder als Granulat eingesetzt werden.

Die Komponente D kommt in den erfindungsgemäßen Zusammensetzungen bevorzugt in einer Menge von 0 bis 30 Gew.-Teilen, bevorzugt von 0,1 bis 20 Gew.-Teilen, besonders bevorzugt von 0,5 bis 10 Gew.-Teilen, jeweils bezogen auf die Summe der Gewichtsteile der Komponenten A bis D = 100 Gew.-Teile, zum Einsatz.

### Beispiele

### Komponente A-1

Lineares Polycarbonat auf Basis Bisphenol-A mit einem gewichtsgemittelten Molekulargewicht M̅ _{w} von 28000 g/mol (bestimmt durch GPC). Das Polycarbonat liegt als Granulat vor und enthält etwa 150 ppm VOCs.

### Komponente A-2

Lineares Polycarbonat-Granulat auf Basis Bisphenol-A mit einem gewichtsgemittelten Molekulargewicht M̅_{w} von 28000 g/mol (bestimmt durch GPC). Das Polycarbonat liegt als Pulver vor und enthält etwa 150 ppm VOCs.

### Komponente B

Pulverförmiges ABS-Pfropfpolymerisat mit Kern-Schale Struktur hergestellt in Emulsionspolymerisation bestehend aus 40 Gew.-% Styrol-Acrylnitril Copolymer mit einem Verhältnis von Styrol zu Acrylnitril von 72 : 28 Gew.-% als Hülle auf 60 Gew.-% einer teilchenförmigen Pfropfgrundlage mit einer mittleren Teilchengröße d₅₀ von 0,3 µm als Kern, wobei die Pfropfgrundlage aus reinem Polybutadienkautschuk besteht. Das Pfropfpolymerisat enthält insgesamt ca. 0,4 Gew.-% (4000 ppm) VOCs und besitzt einen Wassergehalt (Restfeuchte) von ca. 1,0 Gew.-%.

### Komponente C-1

Styrol/Arylnitril-Copolymerisat mit einem Styrol/Acrylnitril-Gewichtsverhältnis von 72:28 Gew.-% und einem mittleren Molekulargewicht Mw von 130000 g/mol (Messung per GPC in Dimethylformamid bei 20°C). Das Styrol/Arylnitril-Copolymerisat wurde in Massepolymerisation unter Verwendung von Ethylbenzol als Lösungsmittel hergestellt. Das Styrol/Arylnitril-Copolymerisat enthält insgesamt ca. 1000 ppm VOCs. Komponente C-1 wird in Granulatform eingesetzt

### Komponente C-2

Präcompound aus einem in Emulsion hergestellten ABS-Pfropfpolymerisat und einem in Massepolymerisation unter Verwendung von Ethylbenzol als Lösungsmittel hergestellten SAN-Polymerisat. Der Präcompound C-2 weist ein Acrylnitril : Butadien : Styrol-Gewichtsverhältnis von 20:28:52 Gew.-% auf und enthält freies, d.h. nicht chemisch an den Kautschuk angebundenen SAN mit einem mittleren Molekulargewicht Mw von 100000 g/mol (Messung per GPC in Dimethylformamid bei 20°C). Komponente C-2 enthält insgesamt ca. 300 ppm VOCs und wird in Granulatform eingesetzt.

### Komponente C-3

ABS-Pfropfpolymerisat hergestellt in Emulsionspolymerisation mit einem Acrylnitril : Butadien : Styrol-Gewichtsverhältnis von 16 : 27 : 57 Gew.-%. Komponente C-3 enthält insgesamt ca. 1000 ppm VOCs und wird in Granulatform eingesetzt.

### Komponente D

- Komponente D-1:: Phosphorigsäureester des Bis-(2-hydroxy-3-cyclohexyl-5-methyl-phenyl)-methans gemäß der folgenden Formel (V), wobei Komponente D-1 in Pulverform eingesetzt wird. 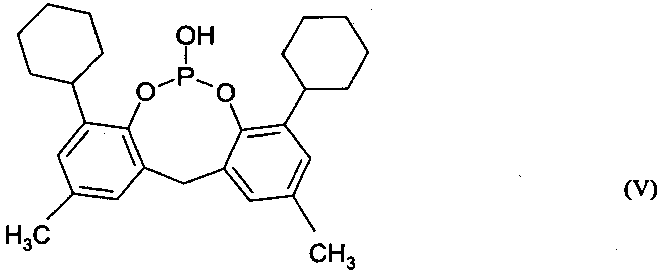
- Komponente D-2:: Pentaerithrithtetrastearat als Entformungsmittel in Pulverform.
- Komponente D-3:: Stabilisator Irganox^{®} B900 (Ciba, Basel, Schweiz) in Pulverform.
- Komponente D-4:: Antioxidanz Irganox 1076 (Ciba, Basel, Schweiz) in Pulverform.
- Komponente D-5:: Wasserfreie Zitronensäure in Pulverform.

### Herstellung und Prüfung der Formmassen

Auf einem Zweischneckenextruder Evolum^{®} 32 HT der Fa. Clextral (Frankreich) mit Verhältnis Länge zu Durchmesser L/D = 36 - nachfolgend ZSK Evolum® genannt - wurden gemäß nachfolgend beschriebenen Verfahren folgende Zusammensetzung hergestellt:

### Beispiele 1 bis 5

| | |
|---|---|
| 42,7 Gew.-Teile | Komponente A-1 |
| 25,2 Gew.-Teile | Komponente B |
| 31,2 Gew.-Teile | Komponente C-1 |
| 0,15 Gew.-Teile | Komponente D-1 |
| 0,75 Gew.-Teile | Komponente D-2 |

Der Gehalt der durch die polymeren Rohstoffe A bis C in den Compoundierungsprozess eingetragenen VOCs, das heißt die Summe der jeweils mit den jeweiligen prozentualen Anteilen der Komponenten A bis C in der Zusammensetzung gewichteten VOC-Gehalte dieser Ausgangsrohstoffe, betrug bei den Beispielen 1 bis 5 etwa 1380 ppm.

### Beispiele 6 bis 9

| | |
|---|---|
| 70,23 Gew.-Teile | Komponente A-1 |
| 9,0 Gew.-Teile | Komponente B |
| 4,8 Gew.-Teile | Komponente C-1 |
| 15,0 Gew.-Teile | Komponente C-2 |
| 0,75 Gew.-Teile | Komponente D-2 |
| 0,10 Gew.-Teile | Komponente D-3 |
| 0,10 Gew.-Teile | Komponente D-4 |
| 0,02 Gew.-Teile | Komponente D-5 |

Der Gehalt der durch die polymeren Rohstoffe A bis C in den Compoundierungsprozess eingetragenen VOCs, dass heißt die Summe der jeweils mit den jeweiligen prozentualen Anteilen der Komponenten A bis C in der Zusammensetzung gewichteten VOC-Gehalte dieser Ausgangsrohstoffe, betrug bei den Beispielen 6 bis 9 etwa 560 ppm.

### Beispiele 10 bis 12

| | |
|---|---|
| 40,7 Gew.-Teile | Komponente A-1 |
| 3,81 Gew.-Teile | Komponente A-2 |
| 5,9 Gew.-Teile | Komponente C-1 |
| 48,4 Gew.-Teile | Komponente C-3 |
| 0,74 Gew.-Teile | Komponente D-2 |
| 0,15 Gew.-Teile | Komponente D-3 |
| 0,20 Gew.-Teile | Komponente D-4 |
| 0,10 Gew.-Teile | Komponente D-5 |

Der Gehalt der durch die polymeren Rohstoffe A bis C in den Compoundierungsprozess eingetragenen VOCs, das heißt die Summe der jeweils mit den jeweiligen prozentualen Anteilen der Komponenten A bis C in der Zusammensetzung gewichteten VOC-Gehalte dieser Ausgangsrohstoffe, betrug bei den Beispielen 1 bis 5 etwa 790 ppm.

Die aus der jeweiligen Compoundierung resultierenden Granulate wurden auf einer Spritzgussmaschine (Fa. Arburg) bei einer Schmelzetemperatur von 260°C und einer Werkzeugtemperatur von 80°C zu Probekörpern der Abmessung 80 mm x 10 mm x 4 mm verarbeitet.

Die Duktilität wird beurteilt anhand des Kerbschlagzähigkeitswertes aₖ gemessen gemäß ISO 180-1A bei 23°C und -30°C und anhand des Bruchbildes, das im Kerbschlagzähigkeitsversuch unter diesen Bedingungen resultiert.

Die Wärmeformbeständigkeit wird beurteilt anhand des Vicat B120-Wertes gemessen gemäß ISO 306.

Die Schmelzefließfähigkeit wird beurteilt anhand der Schmelzevolumenfließrate (MVR) gemessen gemäß ISO 1133 bei einer Temperatur von 260°C und einer Stempellast von 5 kg.

Zur Bestimmung des VOC-Gesamtgehaltes sowie des Gehaltes an 1,3-Butadien, wird die Granulatprobe in einem verschlossenen Headspace-Vial mit γ-Butyrolacton mehrere Stunden bei 50°C behandelt. Die Analyse erfolgt mit der Headspace-Gaschromatographie mit Flammenionisations-Detektor unter Verwendung eines internen Standards.

Alle Angaben zur Einsatzmenge einer Komponente in Gew.-Teile sind in den nachfolgenden (Vergleichs-)Beispielen jeweils bezogen auf die Summe der Komponenten A bis D = 100 Gew.-Teile.

### Beispiel 1 (Vergleich)

Eine Mischung (i) bestehend aus 9,1 Gew.-Teilen pulverförmiger Komponente B , 0,15 Gew.-Teilen pulverförmiger Komponente D-1 und 0,75 Gew.-Teilen pulverförmiger Komponente D-2 wurde unter Verwendung eines mechanischen Mischers vom Typ CM100 der Fa. Mixaco Dr. Herfeld GmbH & Co. KG Maschinenfabrik (Neuenrade, Deutschland) - nachfolgend Mixaco-Mischer genannt - hergestellt. Im Schritt (ii) wurde diese Mischung über einen separaten Dosiertrichter gemeinsam mit den ebenfalls jeweils über separate Vorlagebehälter dosierten Komponenten A-1, C-1 und der Restmenge von 16,1 Gew.-Teilen an Komponente B in die Einzugszone (3) des ZSK Evolum® gegeben, siehe Abbildung 1. Die resultierende Mischung wurde in der Aufschmelz- und Knetzone (5) des ZSK Evolum®s auf eine Temperatur von etwa 260 °C gebracht und dadurch aufgeschmolzen, bei dieser Temperatur geknetet und dadurch die verflüssigten Komponenten ineinander vordispergiert. In einer Dispergier-/Mischzone (6) erfolgte eine Nachdispergierung. Die so compoundierte Mischung wurde in der folgenden Entgasungszone (7) des ZSK Evolum® durch Anlegen eines Unterdrucks von etwa p_{abs} =100 mbar (absolut) an die Schmelze entgast. Die entgaste Schmelze wurde danach über eine Düse (9) aus dem ZSK Evolum® geführt, im Verfahrensschritt (iii) der resultierende Schmelzestrang zur Abkühlung und Verfestigung durch ein auf 30°C temperiertes Wasserbad (10) geführt, und der erstarrte Polymerstrang nachfolgend mittels eines Stranggranulators (11) granuliert. Die Temperatur der Schmelze beim Austritt aus der Extruderdüse (9) betrug etwa 290°C.

### Beispiel 2

Das Verfahren unterscheidet sich vom Vergleichsbeispiel 1 in der Herstellung der Pulvermischung, bei der 9,1 Gew.-Teile der Komponente B zunächst mit 1,1 Gew.-Teilen bezogen auf die Summe der Komponenten A bis D an Wasser beaufschlagt wurden, eine erste Homogenisierung im Mixaco-Mischer erfolgte, danach 0,15 Gew.-Teile pulverförmige Komponente D-1 und 0,75 Gew.-Teile pulverförmige Komponente D-2 zugegeben wurden und erneut unter Verwendung des Mixaco-Mischers gemischt wurde. Die so hergestellte, mit Wasser beaufschlagte Pulvermischung war rieselfähig und wies einen Gehalt an zugegebenem Wasser von 10 Gew.-% auf. Diese Mischung wurde im Verfahren gemäß schematischer Darstellung in Abbildung 1 über einen separaten Dosiertrichter gemeinsam mit den ebenfalls jeweils über separate Vorlagebehälter dosierten Komponenten A-1, C-1 und der Restmenge von 16,1 Gew.-Teilen an Komponente B in die Einzugszone (3) des ZSK Evolum® gegeben. Die resultierende Mischung wurde in der Aufschmelz- und Knetzone (5) des ZSK Evolum®s auf eine Temperatur von etwa 260 bis 280°C gebracht, dadurch aufgeschmolzen und das Wasser verdampft, bei dieser Temperatur geknetet und dadurch die verflüssigten Komponenten ineinander vordispergiert. In einer Dispergier-/Mischzone (6) erfolgte eine Nachdispergierung. Die so compoundierte Mischung wurde in der folgenden Entgasungszone (7) des ZSK Evolum® durch Anlegen eines Unterdrucks von etwa 100 mbar (absolut) an die Schmelze entgast. Die entgaste Schmelze wurde danach über eine Düse (9) aus dem ZSK Evolum® geführt, der resultierende Schmelzestrang zur Abkühlung und Verfestigung durch ein auf 30°C temperiertes Wasserbad (10) geführt, und der erstarrte Polymerstrang nachfolgend mittels eines Stranggranulators (11) granuliert. Die mittlere Verweilzeit, in der die Polymerschmelze im Zweiwellenextruder in Kontakt mit Wasserdampf stand, dass heißt die mittlere Verweilzeit der Schmelze im Extruderabschnitt zwischen erster Knetzone und Entgasungszone, betrug in diesem Verfahren etwa 25 s . Die Temperatur der Schmelze beim Austritt aus der Extruderdüse (9) betrug etwa 290°C.

### Beispiel 3

Das Verfahren unterscheidet sich vom Beispiel 2 lediglich in der Herstellung der Pulvermischung, bei der 9,1 Gew.-Teile der pulverförmigen Komponente B zunächst mit 2,5 Gew.-Teilen bezogen auf die Summe der Komponenten A bis D an Wasser beaufschlagt wurden, eine erste Homogenisierung im Mixaco-Mischer erfolgte, danach 0,15 Gew.-Teile pulverförmige Komponente D-1 und 0,75 Gew.-Teile pulverförmige Komponente D-2 zugegeben wurden und erneut unter Verwendung des Mixaco-Mischers gemischt wurde. Die so hergestellte, mit Wasser beaufschlagte Pulvermischung war rieselfähig und wies einen Gehalt an zugegebenem Wasser von 20 Gew.-% auf.

### Beispiel 4 (Vergleich)

Das Verfahren unterscheidet sich vom Beispiel 2 lediglich in der Herstellung der Pulvermischung, bei der 9,1 Gew.-Teile der pulverförmigen Komponente B zunächst mit 4,3 Gew.-Teilen bezogen auf die Summe der Komponenten A bis D an Wasser beaufschlagt wurden, eine erste Homogenisierung im Mixaco-Mischer erfolgte, danach 0,15 Gew.-Teile pulverförmige Komponente D-1 und 0,75 Gew.-Teile pulverförmige Komponente D-2 zugegeben wurden und erneut unter Verwendung des Mixaco-Mischers gemischt wurde. Die so hergestellte, mit Wasser beaufschlagte Pulvermischung war rieselfähig und wies einen Gehalt an zugegebenem Wasser von 30 Gew.-% auf. Bei der Extrusion kam es nach kurzer Zeit zu Problemen aufgrund von rückstauender Feuchte im Einzugsbereich des ZSK Evolum®. Die Compoundierung musste infolge dessen abgebrochen werden.

### Beispiel 5

Das Verfahren unterscheidet sich vom Beispiel 4 lediglich dadurch, dass die gemäß Beispiel 4 hergestellte, mit 30 Gew.-% Wasser, bezogen auf die Pulvermischung, beaufschlagte Pulvermischung nicht gemeinsam mit den übrigen Komponenten über einen separaten Dosiertrichter in die Einzugszone (3) des ZSK Evolum® gegeben, sondern im Verfahren gemäß schematischer Darstellung in Abbildung 2 über einen Seitenextruder (13) zwischen Aufschmelz-/Knetzone (5) einerseits und Dispergier-/Mischzone (6) andererseits direkt in die vorgemischte Schmelze der Mischung der übrigen Komponenten eindosiert, nachfolgend in der Dispergier-/Mischzone (6) die gesamte Mischung dispergiert und die so resultierende Schmelze der Polymermischung in der folgenden Entgasungszone (7) des ZSK Evolum® durch Anlegen eines Unterdrucks von p_{abs} = 100 mbar (absolut) an die Schmelze entgast wurde. Die mittlere Verweilzeit, in der die Polymerschmelze im Zweiwellenextruder in Kontakt mit Wasserdampf stand, das heißt die mittlere Verweilzeit der Schmelze im Extruderabschnitt zwischen Seitenextruder und Entgasungszone, betrug in diesem Verfahren etwa 15 s. Die Temperatur der Schmelze beim Austritt aus der Extruderdüse (9) betrug etwa 290°C.

### Beispiel 6 (Vergleich)

Es wurde im Mixaco-Mischer eine Mischung aus den pulverförmigen Komponenten B und D2 bis D5 hergestellt. Diese Mischung wurde im Verfahren gemäß schematischer Darstellung in Abbildung 1 über einen separaten Dosiertrichter gemeinsam mit den ebenfalls jeweils über separate Vorlagebehälter dosierten Komponenten A-1, C-1 und C-2 in den Einzugszone (3) des ZSK Evolum® gegeben. Die resultierende Mischung wurde in der Aufschmelz- und Knetzone (5) des ZSK Evolum®s auf eine Temperatur von etwa 260 bis 280°C gebracht und dadurch aufgeschmolzen, bei dieser Temperatur geknetet und dadurch die verflüssigten Komponenten ineinander vordispergiert. In einer Dispergier-/Mischzone (6) erfolgte eine Nachdispergierung. Die so compoundierte Mischung wurde in der folgenden Entgasungszone (7) des ZSK Evolum® durch Anlegen eines Unterdrucks von etwa p_{abs} = 100 mbar (absolut) an die Schmelze entgast. Die entgaste Schmelze wurde dann über eine Düse (9) aus dem ZSK Evolum® geführt, der resultierende Schmelzestrang zur Abkühlung und Verfestigung durch ein auf 30°C temperiertes Wasserbad (10) geführt, und der erstarrte Polymerstrang nachfolgend mittels eines Stranggranulators (11) granuliert. Die Temperatur der Schmelze beim Austritt aus der Extruderdüse (9) betrug etwa 300°C.

### Beispiel 7

Das Verfahren unterscheidet sich vom Vergleichsbeispiel 6 in der Herstellung der Pulvermischung, bei der die Komponente B zunächst mit 1,1 Gew.-Teilen bezogen auf die Summe der Komponenten A bis D an Wasser beaufschlagt wurde, eine erste Homogenisierung im Mixaco-Mischer erfolgte, danach die Komponenten D2 bis D5 zugegeben wurden und erneut unter Verwendung des Mixaco-Mischers gemischt wurde. Die so hergestellte, mit Wasser beaufschlagte Pulvermischung war rieselfähig und wies einen Gehalt an zugegebenem Wasser von 10 Gew.-% auf. Diese Mischung wurde über einen separaten Dosiertrichter gemeinsam mit den ebenfalls jeweils über separate Vorlagebehälter dosierten Komponenten A-1, C-1 und C-2 in die Einzugszone (3) des ZSK Evolum® gegeben. Die resultierende Mischung wurde in der Aufschmelz- und Knetzone (5) des ZSK Evolum®s auf eine Temperatur von etwa 260 bis 280°C gebracht, dadurch aufgeschmolzen und das Wasser verdampft, bei dieser Temperatur geknetet und dadurch die verflüssigten Komponenten ineinander vordispergiert. In einer Dispergier-/Mischzone (6) erfolgte eine Nachdispergierung. Die so compoundierte Mischung wurde in der folgenden Entgasungszone (7) des ZSK Evolum® durch Anlegen eines Unterdrucks von etwa p_{abs}= 100 mbar (absolut) an die Schmelze entgast. Die entgaste Schmelze wurde danach über eine Düse (9) aus dem ZSK Evolum® geführt, der resultierende Schmelzestrang zur Abkühlung und Verfestigung durch ein auf 30°C temperiertes Wasserbad (10) geführt, und der erstarrte Polymerstrang nachfolgend mittels eines Stranggranulators (11) granuliert. Die mittlere Verweilzeit, in der die Polymerschmelze im Zweiwellenextruder in Kontakt mit Wasserdampf steht, das heißt die mittlere Verweilzeit der Schmelze im Extruderabschnitt zwischen erster Knetzone und Entgasungszone, betrug in diesem Verfahren etwa 25 s. Die Temperatur der Schmelze beim Austritt aus der Extruderdüse (9) betrug etwa 300°C.

### Beispiel 8

Es wurde eine Pulvermischung hergestellt, indem die pulverförmige Komponente B zunächst mit 2,5 Gew.-Teilen bezogen auf die Summe der Komponenten A bis D an Wasser beaufschlagt wurde, eine erste Homogenisierung im Mixaco-Mischer erfolgt, danach die Komponenten D2 bis D5 zugegeben wurden und erneut unter Verwendung des Mixaco-Mischers gemischt wird. Die so hergestellte, mit Wasser beaufschlagte Pulvermischung war rieselfähig und wies einen Gehalt an zugegebenem Wasser von 20 Gew.-% auf. Analog zum Beispiel 5 wurden die Komponenten A, C-1 und C-2 im Verfahren gemäß schematischer Darstellung in Abbildung 2 über separate Dosiertrichter (2) in die Einzugszone (3) des ZSK Evolum® gegeben. Die resultierende Mischung wurde in der Aufschmelz- und Knetzone (5) des ZSK Evolum®s auf eine Temperatur von etwa 260 bis 280°C gebracht und dadurch aufgeschmolzen, bei dieser Temperatur geknetet und die verflüssigten Komponenten der Zusammensetzung dadurch ineinander vordispergiert. In die so compoundierte Polymerschmelze wurde per Seitenextruder (13) die mit Wasser beaufschlage Pulvermischung eingeführt und die Komponenten der Zusammensetzung in der folgenden Dispergier-/Mischzone (6) nochmals ineinander dispergiert.. In der folgenden Entgasungszone (7)des ZSK Evolum® wurde die Polymerlegierung durch Anlegen eines Unterdrucks von etwa 100 mbar (absolut) an die Schmelze entgast. Die entgaste Schmelze wurde über eine Düse (9) aus dem ZSK Evolum® geführt, der resultierende Schmelzestrang zur Abkühlung und Verfestigung durch ein auf 30°C temperiertes Wasserbad (10) geführt, und der erstarrte Polymerstrang nachfolgend mittels eines Stranggranulators (11) granuliert. Die mittlere Verweilzeit, in der die Polymerschmelze im Zweiwellenextruder in Kontakt mit Wasserdampf steht, das heißt die mittlere Verweilzeit der Schmelze im Extruderabschnitt zwischen Seitenextruder und Entgasungszone, betrug in diesem Verfahren etwa 15 s. Die Temperatur der Schmelze beim Austritt aus der Extruderdüse (9) betrug etwa 300°C.

### Beispiel 9

Beispiel 9 unterscheidet sich von Beispiel 8 lediglich darin, dass bei der Herstellung der Pulvermischung 4,3 Gew.-Teile, bezogen auf die Summe der Komponenten A bis D an Wasser beaufschlagt wurden. Die so hergestellte, mit Wasser beaufschlagte Pulvermischung war rieselfähig und wies einen Gehalt an zugegebenem Wasser von 30 Gew.-% auf. Die Temperatur der Schmelze beim Austritt aus der Extruderdüse (9) betrug etwa 300°C.

### Beispiel 10 (Vergleich)

Es wurde im Mixaco-Mischer eine Mischung aus den pulverförmigen Komponenten A-2 und D-2 bis D-5 hergestellt. Diese Vormischung wurde im Verfahren gemäß schematischer Darstellung in Abbildung 1 über einen separaten Dosiertrichter (1) gemeinsam mit den ebenfalls jeweils über separate Vorlagebehälter (2) dosierten Komponenten A-1, C-1 und C-3 in die Einzugszone (3) des ZSK Evolum® gegeben. Die resultierende Mischung wurde in der Aufschmelz- und Knetzone (5) des ZSK Evolum®s auf eine Temperatur von etwa 260 bis 280°C gebracht und dadurch aufgeschmolzen, bei dieser Temperatur geknetet und dadurch die verflüssigten Komponenten ineinander vordispergiert. In einer Dispergier-/Mischzone (6) erfolgte eine Nachdispergierung. Die so compoundierte Mischung wurde in der folgenden Entgasungszone (7) des ZSK Evolum® durch Anlegen eines Unterdrucks von etwa p_{abs} = 100 mbar (absolut) an die Schmelze entgast. Die entgaste Schmelze wurde dann über eine Düse (9) aus dem ZSK Evolum® geführt, der resultierende Schmelzestrang zur Abkühlung und Verfestigung durch ein auf 30°C temperiertes Wasserbad (10) geführt, und der erstarrte Polymerstrang nachfolgend mittels eines Stranggranulators (11) granuliert. Die Temperatur der Schmelze beim Austritt aus der Extruderdüse (9) betrug etwa 280°C.

### Beispiel 11 (Vergleich)

Das Verfahren unterscheidet sich vom Vergleichsbeispiel 10 in der Herstellung der Pulvermischung, bei der die pulverförmigen Komponenten A-2 und D-2 bis D-5 zunächst mit 0,55 Gew.-Teilen bezogen auf die Summe der Komponenten A bis D an Wasser beaufschlagt wurden und eine Homogenisierung im Mixaco-Mischer erfolgte. Die so hergestellte, mit Wasser beaufschlagte Pulvervormischung war rieselfähig und wies einen Gehalt an zugegebenem Wasser von 10 Gew.-% auf. Analog zum Beispiel 5 wurden die Komponenten A, C-1 und C-3 im Verfahren gemäß schematischer Darstellung in Abbildung 2 über separate Dosiertrichter (2) in die Einzugszone (3) des ZSK Evolum® gegeben. Die resultierende Mischung wurde in der Aufschmelz- und Knetzone (5) des ZSK Evolum®s auf eine Temperatur von etwa 260 bis 280°C gebracht und dadurch aufgeschmolzen, bei dieser Temperatur geknetet und die verflüssigten Komponenten der Zusammensetzung dadurch ineinander vordispergiert. In die so compoundierte Polymerschmelze wurde per Seitenextruder (13) die mit Wasser beaufschlage Pulvermischung eingeführt und die Komponenten der Zusammensetzung in der folgenden Dispergier-/Mischzone (6) ineinander dispergiert. In der folgenden Entgasungszone (7) des ZSK Evolum® wurde die Polymerlegierung durch Anlegen eines Unterdrucks von etwa p_{abs} = 100 mbar (absolut) an die Schmelze entgast. Die entgaste Schmelze wurde über eine Düse (9) aus dem ZSK Evolum® geführt, der resultierende Schmelzestrang zur Abkühlung und Verfestigung durch ein auf 30°C temperiertes Wasserbad (10) geführt, und der erstarrte Polymerstrang nachfolgend mittels eines Stranggranulators (11) granuliert. Die mittlere Verweilzeit, in der die Polymerschmelze im Zweiwellenextruder in Kontakt mit Wasserdampf steht, das heißt die mittlere Verweilzeit der Schmelze im Extruderabschnitt zwischen Seitenextruder und Entgasungszone, betrug in diesem Verfahren etwa 15 s. Die Temperatur der Schmelze beim Austritt aus der Extruderdüse (9) betrug etwa 280°C.

### Beispiel 12 (Vergleich)

Das Verfahren unterscheidet sich vom Vergleichsbeispiel 11 lediglich darin, dass bei der Herstellung der Pulvermischung 1,25 Gew.-Teile bezogen auf die Summe der Komponenten A bis D an Wasser eingesetzt wurden. Die so hergestellte, mit Wasser beaufschlagte Pulvervormischung war rieselfähig und wies einen Gehalt an zugegebenem Wasser von 20 Gew.-% auf. Die Temperatur der Schmelze beim Austritt aus der Extruderdüse (9) betrug etwa 280°C.

**Tabelle 1: Eigenschaften der erfindungsgemäßen Beispiele und Vergleichsbeispiele**

| | **1** | **2** | **3** | **5** |
|---|---|---|---|---|
| | **(Vgl.)** | | | |
| aₖ (23°C) [kJ/m²] | 79 | 77 | 83 | 80 |
| Bruchbild | duktil | duktil | duktil | duktil |
| aₖ (-30°C) [kJ/m²] | 44 | 39 | 53 | 63 |
| Bruchbild | duktil | duktil | duktil | duktil |
| MVR [ml/10min] | 13 | 16 | 13 | 11 |
| Vicat B120 [°C] | 112 | 113 | 113 | 113 |

| **Restflüchtige** | | | | |
|---|---|---|---|---|
| Butadien [ppm] | 1,3 | 0,9 | 0,8 | 0,9 |
| Gesamt-VOC [ppm] | 802 | 484 | 309 | 383 |

**Tabelle 2: Eigenschaften der erfindungsgemäßen Beispiele und Vergleichsbeispiele**

| | **6** | **7** | **8** | **9** |
|---|---|---|---|---|
| | **(Vgl.)** | | | |
| aₖ (23°C) [kJ/m²] | 49 | 49 | 49 | 51 |
| Bruchbild | duktil | duktil | duktil | duktil |
| aₖ (-30°C) [kJ/m²] | 45 | 46 | 44 | 45 |
| Bruchbild | duktil | duktil | duktil | duktil |
| MVR [ml/10min] | 11 | 12 | 14 | 12 |
| Vicat B120 [°C] | 132 | 133 | 134 | 134 |

| **Restflüchtige** | | | | |
|---|---|---|---|---|
| Butadien [ppm] | 1,7 | 1,4 | 1,3 | 1,4 |
| Gesamt-VOC [ppm] | 191 | 97 | 75 | 84 |

Die Beispiele in den Tabellen 1 und 2 zeigen, dass durch das erfindungsgemäße Verfahren eine Reduktion von Butadienmonomeren von bis zu etwa 40% und von Gesamt-VOCs sogar von bis zu etwa 60% gegenüber dem Verfahren gemäß Stand der Technik erzielt werden kann (vergleiche Beispiel 3 mit Vergleichsbeispiel 1 und Beispiel 8 mit Vergleichsbeispiel 6). Durch Erhöhung des Wassergehalts in der Pulvervormischung von 10 auf 20% werden die Restmonomere weiter reduziert (vergleiche Beispiele 2 und 3 sowie Beispiele 7 und 8). Eine Reduktion des Restflüchtigen-Gehalts gegenüber dem Stand der Technik wird sowohl bei Dosierung der Pulvervormischung über den Haupteinzug (Beispiele 2 und 3 sowie Beispiel 7) als auch bei Dosierung der Pulvervormischung in die Schmelzemischung der restlichen Blendkomponenten über einen Seitenextruder (Beispiel 5 sowie Beispiele 8 und 9) erreicht, wobei sich jedoch die Einbringung der Pulvervormischung über den Haupteinzug im Hinblick auf die Reduktion der Restflüchtigen als geringfügig vorteilhaft erweist (vergleiche Beispiele 3 und 5).

Die Beispiele in Tabelle 1 zeigen darüber hinaus, dass die Verwendung von Wasser als Schleppmittel gemäß dem erfindungsgemäßen Verfahren aufgrund der schonenden Compoundierungsbedingungen (niedrige Temperaturen bei kurzer Verweilzeit) keinen negativen Einfluss auf die anwendungstechnischen Eigenschaften des Blends (Fließfähigkeit, Zähigkeit, Wärmeformbeständigkeit) ausübt. Hieraus kann geschlossen werden, dass die Integrität des Polycarbonatmolekulargewichtes sowie des Schlagzähmodifikators im erfindungsgemäßen Verfahren erhalten und unbeschadet bleibt. Der niedrigere Gehalt an 1,3-Butadien in den Zusammensetzungen, welche gemäß erfindungsgemäßer Verfahren hergestellt wurden, verglichen mit den Vergleichsbeispielen deutet darüber hinaus sogar darauf hin, dass die maximale Temperatur (Hot-Spot-Temperatur) im erfindungsgemäßen Verfahren insgesamt niedriger ist als im Verfahren gemäß Stand der Technik.

**Tabelle 3: Eigenschaften weiterer Vergleichsbeispiele**

| | **10** | **11** | **12** |
|---|---|---|---|
| | **(Vgl.)** | **(Vgl.)** | **(Vgl.)** |
| aₖ (23°C) [kJ/m²] | 65 | 55 | 53 |
| Bruchbild | duktil | duktil | duktil |
| aₖ (-30°C) [kJ/m²] | 63 | 51 | 48 |
| Bruchbild | duktil | duktil | duktil |
| MVR [ml/10min] | 10 | 9 | 9 |
| Vicat B120 [°C] | 114 | 113 | 110 |

| **Restflüchtige** | | | |
|---|---|---|---|
| Butadien [ppm] | 0,4 | 0,4 | 0,4 |
| Gesamt-VOC [ppm] | 285 | 280 | 285 |

Die Vergleichsbeispiele 10 bis 12 in Tabelle 3 zeigen, dass ein alternatives Verfahren, in welchem das Schleppmittel Wasser nicht auf ein saugfähiges Pfropfpolymer, sondern in vergleichbarer absoluter Menge auf eine Additivmischung auf Basis von Polycarbonatpulver als Träger aufgezogen wird, zu keiner vergleichbaren Reduktion der Restflüchtigengehalte führt. Somit wird überraschend gefunden, dass das Verfahren der Wasserzuführung in die Polymerschmelze des Compounds von essentieller Bedeutung im Hinblick auf die Lösung der der Erfindung zugrundeliegenden Aufgabe ist. Eine Reduktion des Restflüchtigenniveaus wird überraschenderweise nur dann erzielt, wenn das Wasser aufgezogen auf eine saugfähiges Pfropfpolymer in das Compoundierungsverfahren eingebracht wird.

## Patentansprüche

1. Verfahren zur Herstellung von schlagzähmodifizierten Polymerzusammensetzungen enthaltend
A) mindestens ein kautschukfreies organisches thermoplastisches Polymer,
B) mindestens ein pulverförmiges Pfropfpolymerisat aus
B.1) einem Vinyl(co)polymerisat als Hülle, und
B.2) einem Elastomer als Kern,
wobei das Pfropfpolymerisat einen Restgehalt an flüchtigen organischen Verbindungen (VOC) von nicht mehr als 10000 ppm aufweist,
C) gegebenenfalls ein weiteres Polymerharz ausgewählt aus mindestens einem Polymer der Gruppe bestehend aus einem kautschukfreien Vinyl(co)polymer C.1 und einem granulatförmigen kautschukmodifizierten Vinyl(co)polymer C.2,
D) gegebenenfalls handelsübliche Polymeradditive verschieden von den Komponenten A, B und C,
wobei
(i) eine Mischung mit einem Wassergehalt (bezogen auf diese im Schritt (i) hergestellte Mischung) von 2 bis 40 Gew.-%, hergestellt wird aus
- der Gesamtmenge oder einer Teilmenge der eingesetzten Komponente B,
- gegebenenfalls der Gesamtmenge oder Teilmengen der Komponenten A, C und/oder D
- sowie 0,4 bis 7 Gew.-Teilen (bezogen auf die Gesamtzusammensetzung aus A+B+C+D=100 Gew.-Teile) an Wasser,
(ii) die aus Schritt (i) resultierende Mischung mit den jeweiligen Gesamtmengen bzw. nach Schritt (i) verbliebenen Teilmengen der Komponenten A bis D der Zusammensetzung in einem Compoundierungsaggregat durch Zuführung thermischer und/oder mechanischer Energie auf eine Temperatur von 200°C bis 350°C aufgeheizt und dadurch aufgeschmolzen, gemischt, ineinander dispergiert und nachfolgend in einer Entgasungszone des Compoundierungsaggregats entgast werden,
- wobei das Compoundierungsaggregat eine Aufschmelz- und Mischzone oder eine kombinierte Aufschmelz- und Mischzone aufweist,
- wobei die aus Schritt (i) resultierende Mischung vollständig oder optional jeweils teilweise zum einen gemeinsam mit den Restmengen der Komponenten A bis D der Zusammensetzung in eine Zone vor der Aufschmelzzone in das Compoundierungsaggregat, oder alternativ in eine Zone hinter der Aufschmelzzone direkt in die vorgemischte Schmelze der in die Zone vor der Aufschmelzzone dosierten Komponenten der Zusammensetzung dosiert werden kann,
- wobei in der Entgasungszone des Compoundierungsaggregats ein absoluter Druck p_{abs} von höchstens 800 mbar eingestellt wird,
(iii) die aus Schritt (ii) resultierende Schmelze bei Austritt aus dem Compoundierungsaggregat durch Abkühlen wieder verfestigt wird.

2. Verfahren gemäß Anspruch 1, wobei in Schritt (i) 0,2 bis 7 Gew.-Teile (bezogen auf die Gesamtzusam¬men¬setzung aus A+B+C+D=100 Gew.-Teile) an Wasser zugesetzt werden.

3. Verfahren gemäß Anspruch 1, wobei in Schritt (ii) die mittlere Verweilzeit, in der die Schmelze der Zusammensetzung mit dem Wasser aus der in Schritt (i) hergestellten Mischung in Kontakt steht, auf maximal 90 s begrenzt ist.

4. Verfahren gemäß Anspruch 1, wobei als Compoundierungsaggregat ein Zweischneckenextruder eingesetzt wird.

5. Verfahren gemäß Anspruch 4, wobei der Zweischneckenextruder ein Längen/DurchmesserVerhältnis der Schneckenwelle von 32 bis 44 aufweist.

6. Verfahren gemäß Anspruch 1, wobei als Komponente A mindestens ein Polymer hergestellt durch Polykondensationsreaktion eingesetzt wird.

7. Verfahren gemäß Anspruch 1, wobei als Komponente A mindestens ein Polymer ausgewählt aus der Gruppe bestehend aus Polycarbonat, Polyestercarbonat, Polyester eingesetzt wird.

8. Verfahren gemäß Anspruch 1, wobei als Komponente B ein ABS-Pfropfpolymer oder MBS-Pfropfpolymer eingesetzt wird.

9. Verfahren gemäß Anspruch 1, wobei die Mischung gemäß Verfahrensschritt (i) ausschließlich aus pulverförmigen Komponenten A bis D der Zusammensetzung und Wasser besteht.

10. Verfahren gemäß Anspruch 1, wobei im Verfahrensschritt (i) eine Mischung mit einem Wassergehalt (bezogen auf diese im Schritt (i) hergestellte Mischung) von 5 bis 32 Gew.-% hergestellt wird aus
- der Gesamtmenge oder einer Teilmenge der eingesetzten Komponente B,
- gegebenenfalls der Gesamtmenge oder Teilmengen der Komponenten A, C und/oder D,
- sowie 0,7 bis 5 Gew.-Teilen (bezogen auf die Gesamtzusammensetzung aus A+B+C+D=100 Gew.-Teile) an Wasser.

11. Verfahren gemäß Anspruch 1, wobei im Verfahrensschritt (i) eine Mischung mit einem Wassergehalt (bezogen auf diese im Schritt (i) hergestellte Mischung) von 8 bis 25 Gew.-% hergestellt wird aus
- der Gesamtmenge oder einer Teilmenge der eingesetzten Komponente B,
- gegebenenfalls der Gesamtmenge oder Teilmengen der Komponenten A, C und/oder D,
- sowie 1,0 bis 3 Gew.-Teilen (bezogen auf die Gesamtzusammensetzung aus A+B+C+D=100 Gew.-Teile) an Wasser.

12. Verfahren gemäß Anspruch 1, wobei im Verfahrensschritt (i) eine Mischung hergestellt wird bestehend aus
5 bis 15 Gew.-Teilen (bezogen auf die Summe der Komponenten A bis D = 100 Gew.-Teile) Komponente B,
0 bis 5 Gew.-Teilen (bezogen auf die Summe der Komponenten A bis D = 100 Gew.-Teile) pulverförmige Komponente D und
8 bis 25 Gew.-Teilen, bezogen auf die in diesem Schritt (i) hergestellte Mischung, Wasser.

13. Verfahren gemäß Anspruch 1 zur Herstellung von schlagzähmodifizierten Polymerzusammensetzungen enthaltend
40 bis 80 Gew.-Teilen Komponente A,
5 bis 30 Gew.-Teile Komponente B,
5 bis 35 Gew.-Teile Komponente C, und
0,5 bis 10 Gew.-Teile Komponente D,
wobei die Summe der Gewichtsteile der Komponenten A bis D = 100 Gew.-Teile ist.

14. Verfahren gemäß Anspruch 1, wobei im Schritt (ii) die aus Schritt (i) resultierende Mischung vollständig gemeinsam mit den Restmengen der Komponenten A bis D der Zusammensetzung in eine Zone vor der Aufschmelzzone in das Compoundierungsaggregat dosiert wird.

15. Verfahren zur Herstellung von schlagzähmodifizierten Polymerzusammensetzungen gemäß Anspruch 1 enthaltend
40 bis 80 Gew.-Teilen mindestens eines Polymers ausgewählt aus der Gruppe bestehend aus Polycarbonat, Polyestercarbonat, Polyester als Komponente A,
5 bis 30 Gew.-Teile mindestens eine Pfropfpolymers ausgewählt aus der Gruppe bestehend aus ABS-Pfropfpolymer oder MBS-Pfropfpolymer als Komponente B,
5 bis 35 Gew.-Teile Komponente C, und
0,5 bis 10 Gew.-Teile Komponente D,
wobei die Summe der Gewichtsteile der Komponenten A bis D = 100 Gew.-Teile ist,
wobei
(i) eine Mischung hergestellt wird bestehend aus
5 bis 15 Gew.-Teilen (bezogen auf die Summe der Komponenten A bis D = 100 Gew.-Teile) Komponente B,
0 bis 5 Gew.-Teilen (bezogen auf die Summe der Komponenten A bis D = 100 Gew.-Teile) pulverförmige Komponente D und
8 bis 25 Gew.-Teilen, bezogen auf die in diesem Schritt (i) hergestellte Mischung, Wasser,
(ii) die aus Schritt (i) resultierende Mischung mit den jeweiligen Gesamtmengen bzw. nach Schritt (i) verbliebenen Teilmengen der Komponenten A bis D der Zusammensetzung in einem Zweiwellenextruder durch Zuführung thermischer und/oder mechanischer Energie auf eine Temperatur von 230°C bis 300°C aufgeheizt und dadurch aufgeschmolzen, gemischt, ineinander dispergiert und nachfolgend durch Anlegen eines Unterdrucks entgast werden,
- wobei das Compoundierungsaggregat mindestens jeweils eine, gegebenenfalls kombinierte Aufschmelz- und Mischzone sowie mindestens eine Entgasungszone aufweist,
- wobei die aus Schritt (i) resultierende Mischung vollständig gemeinsam mit den Restmengen der Komponenten A bis D der Zusammensetzung in eine Zone vor der Aufschmelzzone in das Compoundierungsaggregat dosiert wird,
- wobei in der Entgasungszone des Compoundierungsaggregats ein absoluter Druck p_{abs} von höchstens 500 mbar eingestellt wird,
- wobei die mittlere Verweilzeit, in der die Schmelze der Zusammensetzung mit dem Wasser aus der in Schritt (i) hergestellten Mischung in Kontakt steht, auf maximal 60 s begrenzt ist,
(iii) die aus Schritt (ii) resultierende Schmelze bei Austritt aus dem Compoundierungsaggregat durch Abkühlen wieder verfestigt wird.

## Claims

1. A method of producing impact-modified polymer compositions containing
A) at least one rubber-free organic thermoplastic Polymer,
B) at least one pulverulent graft polymer consisting of
B.1) a vinyle (co)polymer as envelope, and
B.2) an elastomer as core,
wherein the graft polymer has a residual content of volatile organic compounds (VOC) of no more than 10,000 ppm,
C) optionally a further polymer resin selected from at least one polymer of the group consisting of a rubber-free vinyl (co)polymer C.1 and a pellet-form rubber-modified vinyl (co)polymer C.2,
D) optionally conventional commercial polymer additives different from Components A, B and C,
wherein
(i) a mixture with a water content (relative to this mixture produced in step (i)) of 2 to 40 wt.% is produced from
- the total quantity or a proportion of the Component B used,
- optionally the total quantity or proportions of Components A, C and/or D
- and 0.4 to 7 parts by weight (relative to the total composition of A+B+C+D=100 parts by weight) of water,
(ii) the mixture resulting from step (i) comprising the respective total quantities or the proportions of Components A to D of the composition remaining after step (i) is heated in a compounding unit by input of thermal and/or mechanical energy to a temperature of 200°C to 350°C, and thereby melted, mixed, dispersed in one another and subsequently devolatilised in a devolatilising zone of the compounding unit,
- wherein the compounding unit comprises a melting and mixing zone or a combined melting and mixing zone,
- wherein the mixture resulting from step (i) may be metered into the compounding unit completely or optionally in each case partially on the one hand together with the residual quantities of Components A to D of the composition into a zone upstream of the melting zone, or alternatively into a zone downstream of the melting zone directly into the premixed melt of the components of the composition metered into the zone upstream of the melting zone,
- wherein an absolute pressure p_{abs} of at most 800 mbar is established in the devolatilising zone of the compounding unit,
(iii) the melt resulting from step (ii) is resolidified by cooling on discharge from the compounding unit.

2. A method according to claim 1, wherein in step (i) 0.2 to 7 parts by weight (relative to the total composition of A+B+C+D=100 parts by weight) of water are added.

3. A method according to claim 1, wherein in step (ii) the mean residence time, for which the melt of the composition is in contact with the water from the mixture produced in step (i), is limited to at most 90 s.

4. A method according to claim 1, wherein a twin-screw extruder is used as the compounding unit.

5. A method according to claim 4, wherein the twin-screw extruder has a screw length/diameter ratio of 32 to 44.

6. A method according to claim 1, wherein at least one polymer produced by a polycondensation reaction is used as Component A.

7. A method according to claim 1, wherein at least a one polymer selected from the croup consisting of polycarbonate, polyester carbonate, polyester is used as Component A.

8. A method according to claim 1, wherein an ABS graft polymer or MBS graft polymer is used as Component B.

9. A method according to claim 1, wherein the mixture according to method step (i) consists solely of pulverulent components A to D of the composition and water.

10. A method according to claim 1, wherein in method step (i) a mixture with a water content (relative to this mixture produced in step (i)) of 5 to 32 wt.% is produced from
- the total quantity or a proportion of the Component B used,
- optionally the total quantity or proportions of Components A, C and/or D,
- and 0.7 to 5 parts by weight (relative to the total composition of A+B+C+D=100 parts by weight) of water.

11. A method according to claim 1, wherein in method step (i) a mixture with a water content (relative to this mixture produced in step (i)) of 8 to 25 wt.% is produced from
- the total quantity or a proportion of the Component B used,
- optionally the total quantity or proportions of Components A, C and/or D,
- and 1.0 to 3 parts by weight (relative to the total composition of A+B+C+D=100 parts by weight) of water.

12. A method according to claim 1, wherein in method step (i) a mixture is produced consisting of
5 to 15 parts by weight (relative to the total of Components A to D = 100 parts by weight) of Component B,
0 to 5 parts by weight (relative to the total of Components A to D = 100 parts by weight) of pulverulent Component D and
8 to 25 parts by weight of water, relative to the mixture produced in this step (i).

13. A method according to claim 1 for producing impact-modified polymer compositions containing
40 to 80 parts by weight of Component A,
5 to 30 parts by weight of Component B,
5 to 35 parts by weight of Component C, and
0.5 to 10 parts by weight of Component D,
wherein the total of the parts by weight of Components A to D = 100 parts by weight.

14. A method according to claim 1, wherein in step (ii) the mixture resulting from step (i) is metered into the compounding unit completely, together with the residual quantities of Components A to D of the composition, into a zone upstream of the melting zone.

15. A method of producing impact-modified polymer compositions according to claim 1 containing
40 to 80 parts by weight of at least one polymer selected from the group consisting of Polycarbonate, polyester carbonate, polyester as Component A,
5 to 30 parts by weight of at least one graft polymer selected from the group consisting of ABS graft polymer or MBS graft polymer as Component B,
5 to 35 parts by weight of Component C, and
0.5 to 10 parts by weight of Component D,
wherein the total of the parts by weight of Components A to D = 100 parts by weight,
wherein
(i) a mixture is produced consisting of
5 to 15 parts by weight (relative to the total of Components A to D = 100 parts by weight) of Component B,
0 to 5 parts by weight (relative to the total of Components A to D = 100 parts by weight) of pulverulent Component D and
8 to 25 parts by weight of water, relative to the mixture produced in this step (i),
(ii) the mixture resulting from step (i) comprising the respective total quantities or the proportions of Components A to D of the composition remaining after step (i) is heated in a twin-screw extruder by input of thermal and/or mechanical energy to a temperature of 230°C to 300°C, and thereby melted, mixed, dispersed in one another and subsequently devolatilised by the application of a reduced pressure,
- wherein the compounding unit comprises in each case at least one, optionally combined melting and mixing zone and at least one devolatilising zone,
- wherein the mixture resulting from step (i) is metered into the compounding unit completely, together with the residual quantities of Components A to D of the composition, into a zone upstream of the melting zone,
- wherein an absolute pressure p_{abs} of at most 500 mbar is established in the devolatilising zone of the compounding unit,
- wherein the mean residence time, for which the melt of the composition is in contract with the water from the mixture produced in step (i), is limited to at most 60 s,
(iii) the melt resulting from step (ii) is resolidified by cooling on discharge from the compounding unit.

## Revendications

1. Procédé pour la préparation de compostions polymères à résilience modifiée, contenant
A) au moins un polymère thermoplastique organique exempt de caoutchouc,
B) au moins un polymère greffé sous forme de poudre, constitué par
B.1) un (co)polymère de vinyle commue enveloppe, et
B.2) un élastomère comme noyau,
le polymère greffé présentant une teneur résiduelle en composés organiques volatils (COV) qui n'est pas supérieure à 10 000 ppm
C) le cas échéant une autre résine polymère choisie parmi au moines un polymère du groupe constitué par un (co)polymère de vinyle exempt de caoutchouc C.1 et un (co)polymère de vinyle modifié par caoutchouc sous forme de granulat C.2,
D) le cas échéant des additifs polymères usuels du commerce différents des composants A, B et C,
où
(i) un mélange présentant une teneur en eau (par rapport au mélange préparé dans cette étape (i)) de 2 à 40% en poids est préparé à partir de
- la quantité totale ou une quantité partielle du composant B utilisé,
- le cas échéant la quantité totale ou des quantités partielles des composants A, C et/ou D
- ainsi que 0,4 à 7 parties en poids (par rapport à la composition totale de A + B + C + D = 100 parties en poids) d'eau,
(ii) le mélange résultant de l'étape (i) et les différentes quantités totales ou quantités partielles restant après l'étape (i) des composants A à D de la composition sont chauffés dans un appareil de compoundage par alimentation d'énergie thermique et/ou mécanique à une température de 200°C à 350°C et de ce fait fondus, mélangés, dispersés les uns dans les autres et ensuite dégazés dans une zone de dégazage de l'appareil de compoundage,
- l'appareil de compoundage présentant une zone de fusion et une zone de mélange ou une zone combinée de fusion et de mélange,
- le mélange résultant de l'étape (i) pouvant être dosé complètement ou en option à chaque fois partiellement d'une part ensemble avec les quantités résiduelles des composants A à D de la composition dans une zone en amont de la zone de fusion dans l'appareil de compoundage ou en variante dans une zone en aval de la zone de fusion directement dans la masse fondue mélangée au préalable des composants de la composition dosés dans la zone en amont de la zone de fusion,
- une pression absolue p_{abs} d'au plus 800 mbars étant réglée dans la zone de dégazage de l'appareil de compoundage,
(iii) la masse fondue résultant de l'étape (ii) est à nouveau solidifiée par refroidissement à la sortie de l'appareil de compoundage.

2. Procédé selon la revendication 1, 0,2 à 7 parties en poids (par rapport à la composition totale de A + B + C + D = 100 parties en poids) d'eau étant ajoutées dans l'étape (i).

3. Procédé selon la revendication 1, le temps de séjour moyen, pendant lequel la masse fondue de la composition est en contact avec l'eau du mélange préparé dans l'étape (i), étant limité à maximum 90 s dans l'étape (ii).

4. Procédé selon la revendication 1, une extrudeuse à deux vis sans fin étant utilisée comme appareil de compoundage.

5. Procédé selon la revendication 4, l'extrudeuse à deux vis sans fin présentant un rapport longueur/diamètre de l'arbre à vis de 32 à 44.

6. Procédé selon la revendication 1, au moines un polymère préparé par une réaction de polycondensation étant utilisé comme composant A.

7. Procédé selon la revendication 1, au moins un polymère choisi dans le groupe constitué par le polycarbonate, le polyestercarbonate, le polyester étant utilisé comme composant A.

8. Procédé selon la revendication 1, un polymère greffé d'ABS ou un polymère greffé de MBS étant utilisé comme composant B.

9. Procédé selon la revendication 1, le mélange selon l'étape de procédé (i) étant constitué exclusivement des composants A à D sous forme de poudre de la composition et d'eau.

10. Procédé selon la revendication 1, un mélange présentant une teneur en eau (par rapport à ce mélange préparé dans l'étape (1)) de 5 à 32% en poids étant préparé dans l'étape de procédé (i) à partir de
- la quantité totale ou une quantité partielle du composant B utilisé,
- le cas échéant la quantité totale ou des quantités partielles des composants A, C et/ou D
- ainsi que 0,7 à 5 parties en poids (par rapport à la composition totale de A + B + C + D = 100 parties en poids) d'eau.

11. Procédé selon la revendication 1, un mélange présentant une teneur en eau (par rapport à ce mélange préparé dans l'étape (i)) de 8 à 25% en poids étant préparé dans l'étape de procédé (i) à partir de
- la quantité totale ou une quantité partielle du composant B utilisé,
- le cas échéant la quantité totale ou des quantités partielles des composants A, C et/ou D
- ainsi que 1,0 à 3 parties en poids (par rapport à la composition totale de A + B + C + D = 100 parties en poids) d'eau.

12. Procédé selon la revendication 1, un mélange étant préparé dans l'étape de procédé (i), constitué par
5 à 15 parties en poids (par rapport à la somme des composants A à D = 100 parties en poids) de composant B,
0 à 5 parties en poids (par rapport à la somme des composants A à D = 100 parties en poids) de composant D sous forme de poudre et
8 à 25 parties en poids par rapport au mélange préparé dans cette étape (i), d'eau.

13. Procédé selon la revendication 1 pour la préparation de compositions polymères à résilience modifiée, contenant
40 à 80 parties en poids de composant A,
5 à 30 parties en poids de composant B,
5 à 35 parties en poids de composant C, et
0,5 à 10 parties en poids de composent D,
la somme des parties en poids des composants A à D = 100 parties en poids.

14. Procédé selon la revendication 1, le mélange résultant de l'étape (i) étant dosé dans l'étape (ii) complètement ensemble avec les quantités résiduelles des composants A à D de la composition dans une zone en amont de la zone de fusion dans l'appareil de compoundage.

15. Procédé pour la préparation de compositions polymères à résilience modifiée selon la revendication 1, contenant
40 à 80 parties en poids d'au moins un polymère choisi dans le groupe constitué par le polycarbonate, le polyestercarbonate, le polyester comme composant A,
5 à 30 parties en poids d'au moins un polymère greffé choisi dans le groupe constitué par le polymère greffé d'ABS ou le polymère greffé de MBS comme composant B,
5 à 35 parties en poids de composant C et
0,5 à 10 parties en poids de composant D,
la somme des parties en poids des composants A à D = 100 parties en poids,
où
(i) un mélange est préparé, constitué par
5 à 15 parties en poids (par rapport à la somme des composants A à D = 100 parties en poids) de composant B,
0 à 5 parties en poids (par rapport à la somme des composants A à D = 100 parties en poids) de composant D sous forme de poudre et
8 à 25 parties en poids par rapport au mélange préparé dans cette étape (i), d'eau,
(ii) le mélange résultant de l'étape (i) et les différentes quantités totales ou quantités partielles restant après l'étape (i) des composants A à D de la composition sont chauffés dans une extrudeuse à deux arbres par alimentation d'énergie thermique et/ou mécanique à une température de 230°C à 300°C et de ce fait fondus, mélangés, dispersés les uns dans les autres et ensuite dégazés par application d'une dépression,
- l'appareil de compoundage présentant au moines à chaque fois une zone de fusion et une zone de mélange, le cas échéant combinées, ainsi qu'au moins une zone de dégazage,
- le mélange résultant de l'étape (i) étant dosé complètement ensemble avec les quantités résiduelles des composants A à D de la composition dans une zone en amont de la zone de fusion dans l'appareil de compoundage,
- une pression absolue p_{abs} d'au plus 500 mbars étant réglée dans la zone de dégazage de l'appareil de compoundage,
- le temps de séjour moyen, pendant lequel la masse fondue de la composition est en contact avec l'eau du mélange préparé dans l'étape (i), étant limité à maximum 60 s,
(iii) la masse fondue résultant de l'étape (ii) est à nouveau solidifiée par refroidissement à la sortie de l'appareil de compoundage.
